(19) Europäisches Patentamt
European Patent Office
Office européen des brevets

(11) **EP 1 591 697 A2**

(12) **EUROPEAN PATENT APPLICATION**

(43) Date of publication:
**02.11.2005 Bulletin 2005/44**

(51) Int Cl.⁷: **F16H 59/08**, F16H 61/32

(21) Application number: **05290920.7**

(22) Date of filing: **27.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **28.04.2004 JP 2004134230**

(71) Applicant: **Calsonic Kansei Corporation Tokyo 164-8602 (JP)**

(72) Inventors:
• **Osamura, Kensuke c/o Calsonic Kansei Co Nakano-ku Tokyo 164-8602 (JP)**
• **Hirota, Yukitsugu c/o Calsonic Kansei Co Nakano-ku Tokyo 164-8602 (JP)**
• **Shimamura, Yuzo c/o Calsonic Kansei Co Nakano-ku Tokyo 164-8602 (JP)**
• **Nagano, Masaharu c/o Calsonic Kansei Co Nakano-ku Tokyo 164-8602 (JP)**

(74) Representative: **Intes, Didier Gérard André et al Cabinet Beau de Loménie, 158, rue de l'Université 75340 Paris Cedex 07 (FR)**

(54) **Operating position select device for automatic transmission**

(57)    An operating position select device (100) has a select lever unit (1), a mode shift unit (300) to shift operation modes of the automatic transmission (19), a mechanically connecting means (8, 12, 18) connecting them, and an assist actuator (9) to assist a select lever (2). A control unit (22) that controls the actuator (9) is electrically connected to an operating position sensor (200) detecting an operating position of the select lever (2) and an operating velocity detector (35) detecting operating velocity of the lever (2). The control unit (22) includes a target reaction-force characteristic setting part (33), a feedback control part (36; 38) determining feedback assist force by multiplying gain by a variation between target reaction force obtained based on the target operating reaction-force characteristic and the operating force obtained based on the operating force signal, and a gain changing part (36; 38) that changes gain used for determining the feedback assist force based on the operating speed signal.

FIG. 4

EP 1 591 697 A2

## Description

The present invention relates to an operating position select device for an automatic transmission by which a driver can select by operating a select lever one of select mode positions corresponding to a plurality of operation modes of the automatic transmission.

An operating position select device for an automatic transmission of this kind is disclosed in Japanese patent laying-open publication (Tokkaihei) No. 9-323559. This select device includes a select lever unit disposed near a driver's seat in a passenger compartment and a mode shift unit mounted on an automatic transmission. The select lever unit has a select lever manually operated by a driver and is connected with the mode shift unit by a connecting mechanism, such as a control cable, or a connecting linkage, which transmits an operating force applied on the select lever by the driver to the mode shift unit to shift operation modes of the automatic transmission.

The conventional art, however, has a problem that the select lever unit needs a long select lever in order to operate it without a large operating force of the driver, which reduces design freedom concerning an installation location of the select lever unit and/or a layout of a passenger compartment.

This reason comes from the fact that a length of the select lever is determined so that a driver can easily operate the select lever and its operating torque must overcome frictional resistance of the connecting mechanism and the like. Namely, the operating torque, generated by the operating force on the select lever, has to be larger than torque caused by the sum of the frictional resistance in the connecting mechanism and resistance generated when a detent pin, which moves with the select lever, gets over a cam top portion of a detent plate during select operation, although the operating force of the driver is limited to a certain extent. Accordingly, to satisfy both of the above requirements the select lever needs to be longer than a certain length, typically to be 350 mm.

Another operating position select device for an automatic transmission of this kind is disclosed in Japanese patent laying-open publication (Tokkai) No. 2003-97694. This select device is, what is called, a shift-by-wire type one. It has a select lever manually operated by a driver, a select position detector for detecting a position of the select lever, a mode shift unit mounted on an automatic transmission for shifting its operation modes, an electric motor for driving a mode shift unit, and a control unit for controlling the electric motor based on an output signal from the detector.

This select device is suitable for shortening a length of the select lever and expanding design freedom for its installation location and/or layout of a passenger compartment, while the select device lacks a mechanical connection between the select lever and the mode shift unit. This lack of the mechanical connection results in a problem that the mode shift unit can not be sifted despite of operating the select lever in case of electrical failure such that an electric wire is broken, or the select position detector or the control unit fails.

It is, therefore, an object of the present invention to provide an operating position select device for an automatic transmission which overcomes the foregoing drawbacks and can expand design freedom concerning layout of a passenger compartment and/or an installation location of a select lever unit, and drive a mode shift unit despite of electric failure of the operating position select device, with providing favorable select-lever operating feeling in a select operation.

According to the first aspect of the present invention there is provided an operating position select device for an automatic transmission whose operation modes are shiftable, the operating position select device comprising: a select lever unit having a select lever that is operated by a driver between a plurality of select positions corresponding to the operation modes; an operating position sensor that detects an operating position of the select lever and outputs an operating position signal; an operating force sensor that detects operating force applied to the select lever and outputs an operating force signal; an operating speed sensor that detects operating speed of the select lever and outputs an operating speed signal; a mode shift unit mounted on the automatic transmission to shift operation modes of the automatic transmission; a mechanically connecting means that mechanically connects the select lever and the mode shift unit with each other; an assist actuator that is arranged between the select lever and the mode shift unit and supplies assist force to the shift lever; and a control unit that controls the assist actuator, the control unit including a target reaction-force characteristic setting part that sets a target reaction-force characteristic necessary for operating the select lever with respect to the operating position, a feedback control part that determines feedback assist force by multiplying gain by a variation between target reaction force obtained based on the target operating reaction-force characteristic and the operating force obtained based on the operating force signal and outputs a feedback assist force signal, and a gain changing part that changes gain used for determining the feedback assist force based on the operating speed signal.

According to the second aspect of the present invention there is provided an operating position select device for an automatic transmission whose operation modes are shiftable, the operating position select device comprising: a select lever unit having a select lever that is operated by a driver between a plurality of select positions corresponding to the operation modes; an operating position sensor that detects an operating position of the select lever and outputs an operating position signal; an operating force sensor that detects operating force applied to the select lever and outputs an operating force signal; a mode shift unit mounted on the automatic transmission to shift operation modes of the automatic transmission; a mechanically connecting means that mechanically connects the select lever and the mode shift unit with each other; an assist actuator that is arranged between the select lever and the mode shift unit and supplies assist force to the shift lever; and a control unit that controls the assist actuator, the control unit including a target reaction-force characteristic setting part that sets a target reaction-force characteristic necessary for operating the select lever with respect to the operating position, a feedback control part that determines feedback assist force by multiplying gain by a variation between target reaction force obtained based on the target operating reaction-force characteristic and the operating force obtained based on the operating force signal and outputs a feedback assist force signal, and a gain changing part that changes gain used for determining the feedback assist force based on the operating position signal.

The objects, features and advantages of the present invention will become apparent as the description proceeds when taken in conjunction with the accompanying drawings, in which:

FIG. 1 is a schematic diagram showing a structure of an automatic transmission with an operating position select device of a first embodiment according to the present invention;

FIG. 2 is an enlarged perspective view showing an assist actuator that is used in the operating position select device shown in FIG. 1;

FIG. 3 is an enlarged perspective view showing a mode shift unit that has a detent mechanism and is used in the operating position select device shown in FIG. 1;

FIG. 4 is a control bock diagram of a control unit and its peripheral equipment that are used in the operating position select device shown in FIG. 1;

FIG. 5 is a flowchart of an assist process executed in the control unit shown in FIG. 4 for controlling the assist actuator during a select operation;

FIG. 6 is a characteristic diagram showing relationships of operating reaction force acting on a select lever and a cam profile of a detent mechanism with respect to an operating angle of the select lever, when the select lever is shifted from a P position to an R position without assist force outputted from the assist actuator;

FIG. 7 is a characteristic diagram showing a relationship between the operating angle and target operating reaction force;

FIG. 8 is a characteristic diagram showing a relationship between frequency and gain used in the control unit where a time constant can be changed;

FIG. 9 is a control bock diagram of a control unit and its peripheral equipment that are used in an operating position select device of a second embodiment according to the present invention;

FIG. 10 is a characteristic diagram showing relationships of check force caused by a detent mechanism, a spring constant of a spring plate used in the detent mechanism, and a time constant with respect to an operating position of a select lever of the operating position select device of the second embodiment; and

FIG. 11 is a flowchart of an assist process executed in the control unit shown in FIG 9 for controlling an assist actuator.

Throughout the following detailed description, similar reference characters and numbers refer to similar elements in all figures of the drawings, and their descriptions are omitted for eliminating duplication.

An operating position select device of a first preferred embodiment according to the present invention will be described with reference to the accompanying drawings.

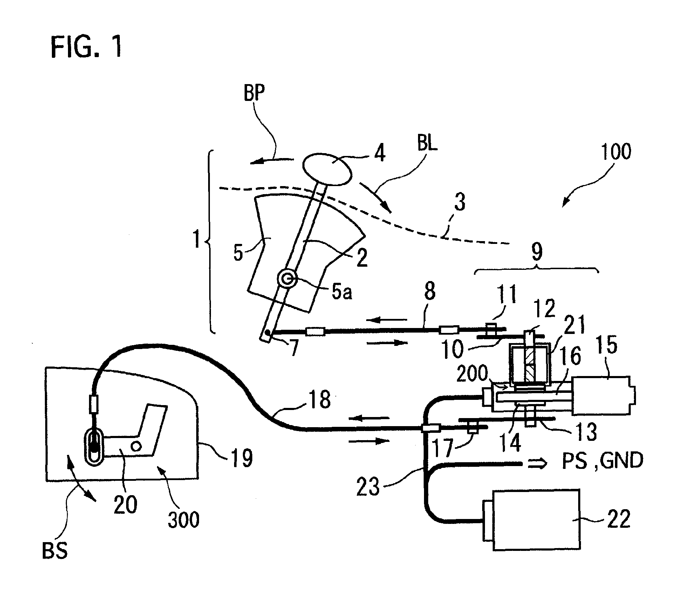

Referring to FIG. 1 of the drawing, there is shown an automatic transmission 19 and an operating position select device 100 to control the transmission 19.

The automatic transmission 19 is a conventional multi-speed transmission with a plurality of planetary gear sets, not shown, and is operatable among a plurality of operation modes, for example, a parking mode, a reverse drive mode, a neutral mode, a forward drive mode, and a forward low gear drive mode.

The automatic transmission 19 is provided with the operating position select device 100, which shifts the operation modes to a desired operation mode by manually selecting a select lever 2 of the select device 100.

The operating position select device 100 includes a select lever unit 1 manually operated by a driver, an mode shift unit 300 mounted on the automatic transmission 19, a first and second control cables 8 and 18 connecting the select lever 2 to the mode shift unit 300, an operating angle sensor 200 for detecting an operating angle of the select lever 2, an assist actuator 9 for assisting operating force inputted from the select lever 2 by the driver, an operating torque sensor 21 for detecting actual operating force applied to the select lever 2, and a control unit 22 for controlling the assist actuator 9.

The select lever unit 1 is arranged, for example, at a center console 3 beside a driver's seat and has the select lever 2 operated by the driver, a bracket 5 fixed to a vehicle body, a supporting shaft 5a fixed on the bracket 5 so as to swingably support the select lever 2, a knob 4 mounted on the top of the select lever 2 so as to be held by a hand of the driver, and a checking mechanism, not shown, for ensuring the select lever 2 to be kept in a selected mode position.

The select lever 2 is set to be approximately 100 mm in length in this embodiment, which is shorter by approximately 250 mm than a conventional type select lever. The lever 2 is operable by the driver swingably in a first direction toward a P position as indicated by an arrow BP and in a second direction, opposite to the first direction, toward an L position as indicated by an arrow BL.

The select lever 2 can be positioned in one of select positions: the P position corresponding to the parking mode of the automatic transmission 19, an R position corresponding to the reverse drive mode, an N position corresponding to the neutral mode, a D position corresponding to the forward drive mode, and the L position corresponding to the forward low geared drive mode.

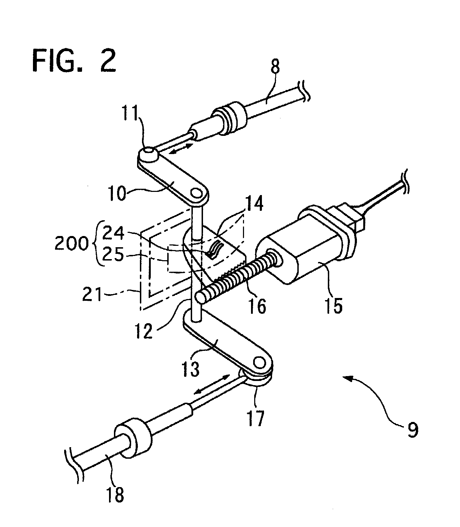

The assist actuator 9, as shown in FIGS. 1 and 2, includes an electric motor 15 with reduction gears for reducing rotation speed of an output shaft of the motor 15, a worm 16 formed on the outer peripheral surface of the output shaft, and a worm wheel 14 meshing with the worm 16 and integrally united to the coupling shaft 12 for coupling the first and second control cables 8 and 18.

The worm wheel 14 is provided on its upper surface with an electric terminal 24 contacting to a carbon resistor 25, indicated by a dashed line in FIG. 2, that is printed on a substrate fixed to a case of the assist actuator 9.

The electric terminal 24 and the carbon resistor 25 constitute the operating angle sensor 200 for detecting an operating angle of the select lever 2 to output an operating angle signal to the control unit 22.

The electric terminal 24 is movable together with and around the coupling shaft 12 to change its position with respect to the carbon resistor 25 that is immobile, so that the operating angle sensor 200 can detect a rotating angle of the coupling shaft 12 and output the operating angle signal that is, for example, proportional to the operating angle of the select lever 2. The operating angle signal is set to increase as the select lever 2 moves toward the L position, in the second direction BL. The operating angle sensor 200 acts as an operating position sensor of the present invention, and the operating angle signal corresponds to an operating position signal of the present invention.

There is provided the operating torque sensor 21 attached to the coupling shaft 12 so as to detect the operating force applied to the select lever 2. Since the operating force is proportional to operating torque applied to the coupling shaft 12, the torque sensor 21 detects the operating force based on relative torsion amount between the upper and lower portions of the coupling shaft 12 and outputs an operating force signal to the control unit 22. The operating force signal, for example, increases with the operating force applied to the select lever 2. The torque sensor 21 acts as an operating force sensor of the present invention.

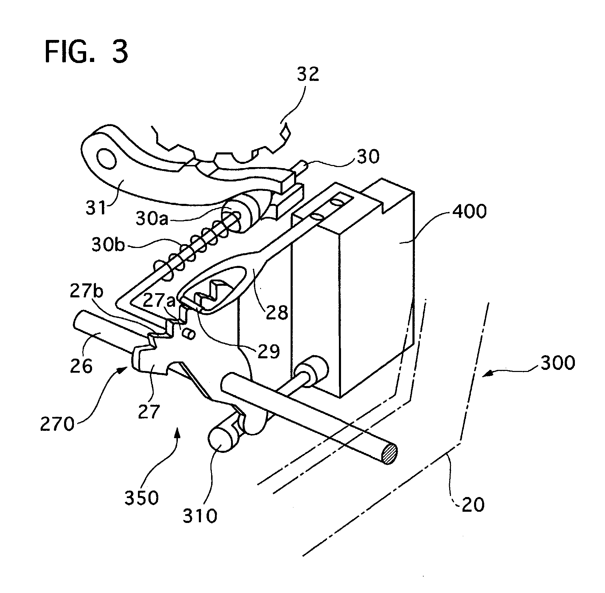

The mode shift unit 300 shifts the operation modes of the automatic transmission 19 according to an operated position of the select lever 2. Referring to FIGS. 1 and 3 of the drawings, the mode shift unit 300 has a manual plate lever 20 and a detent mechanism 350 for keeping the manual plate lever 20 in a position selected by the select lever 2.

The manual plate lever 20 is integrally fixed in its intermediate portion with a rotary shaft 26, and connected at its one end portion with the second control cable 18 so as to be rotated on the shaft 26 with respect to a transmission case of the transmission 19 according to a select operation of the select lever 2. The rotary shaft 26 is fixed to a detent plate 27 of the detent mechanism 350.

The detent mechanism 350 includes the detent plate 27 with a cam 270, a detent pin 29 to be pressed onto the cam 270, and a spring plate 28 acting its spring force on the detent pin 29.

The detent plate 27 is mechanically connected with a valve spool 310 of a manual valve disposed in a control valve unit 400 of the automatic transmission 19 so as to move the spool 300 according to a select position. The detent plate 27 is formed on its upper portion with the cam 270 having top portions 27a and bottom portions 27b. Each bottom portion 27b is arranged between the adjacent top portions 27a and corresponds with one of the five operation modes of the automatic transmission 19.

The cam 270 is pressed by the detent pin 29 that is urged by the spring plate 28. The spring plate 28 is mounted at its one end portion on the control valve unit 400 and supports the detent pin 29 at its other end portion. The spring plate 28 presses the detent pin 29 onto the cam 270 of the detent plate 27 so that the detent pin 29 is positioned in one of the bottom portions 27b to detain the valve spool 310 of the manual valve in the selected position.

The detent plate 27 is coupled at its cam side portion with a parking rod 30 having a wedge 30a that can press a parking pawl 31. The wedge 30a is movable along the rod 30 and presses the parking pawl 31 by spring force of a coil spring 30b so that the pawl 31 engages with a parking wheel 32 united to an output shaft of the automatic transmission 19 when the select lever 2 is shifted to the P position. This engagement of the pawl 31 and the wheel 32 results in locking drive wheels, not shown, for parking a motor vehicle.

The mode shift unit 300 is mechanically connected with the select lever 2 through the first and second control cables 8 and 18, and others. As shown in FIGS. 1 and 2, the first control cable 8 connects at its one end portion with a bottom portion of the select lever 2 through a first joint 7 and at the other end portion with one end portion of an input lever 10 through a second joint 11. The other end portion of the input lever 10 is connected with a top portion of a coupling shaft 12, whose bottom portion is connected with one end portion of an output lever 13. The other end portion of the output lever 13 is connected with one end portion of the second control cable 18 through a third joint 17. The other end portion of the second control cable 18 is, as shown in FIGS. 1 and 3, connected with the manual plate lever 20.

The first and second control cables 8 and 18, the first to third joints 7, 11, and 17, the input and output plates 10 and 13, and the coupling shaft 12 act as a mechanically connecting means of the present invention.

The control unit 22 is electrically connected to a power supply PS, ground GND, the operating angle sensor 200, and the torque sensor 21. The control unit 22 receives the operating angle signal from the operating angle sensor 200 and the operating force signal from the torque sensor 21 so as to compute target assist current based on these signals, and drives the electric motor 15 under pulse width modulation (PWM) control based on the target assist current.

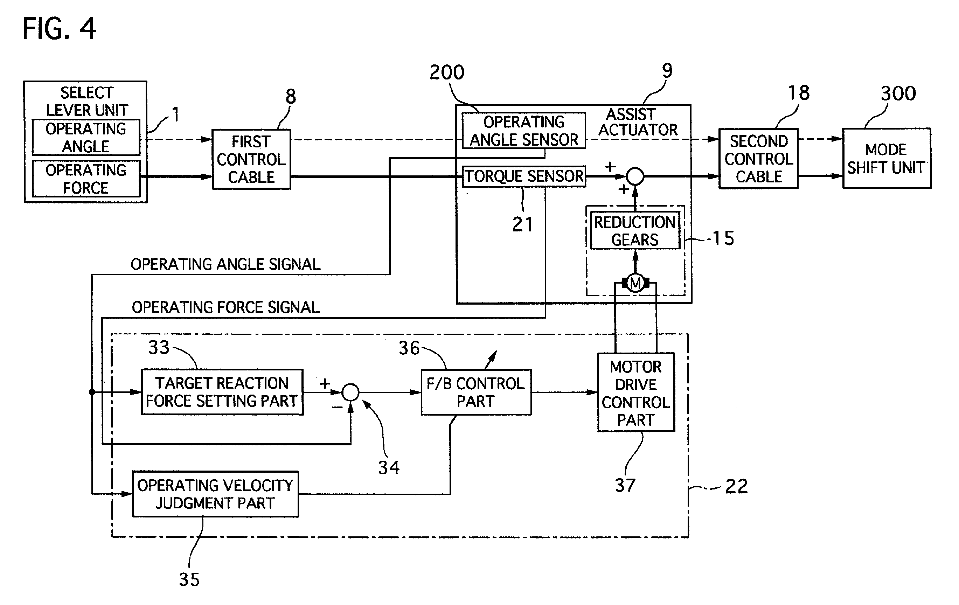

FIG. 4 shows a control block diagram of the control unit 22 and its related units. When the select lever 2 is shifted by a driver, the select lever 2 moves and changes its operating angle, and operating force applied to the lever 2 by the driver is transmitted to the mode sift unit 300 through the first and second control cables 8 and 18, and the coupling shaft 12.

The first control cable 8 rotates the coupling shaft 12, so that the terminal 24 on the worm wheel 14 united with the shaft 12 moves with respect to the carbon resistance 25 to change a relative angle between them. This relative angle, corresponding to an operating angle of the select lever 2, is detected by the operating angle sensor 200, which outputs an operating angle signal to the control unit 22.

Operating force applied to the select lever 2 is transmitted through the first control cable 8 to the coupling shaft 12 and twists it, so that torsion occurs between the upper and lower portions of the shaft 12. This torsion, corresponding to operating force applied to the select lever 2, is detected by the torque sensor 21, which outputs an operating force signal to the control unit 22.

The control unit 22 includes a target reaction force setting part 33, an adder 34, an operating velocity judgment part 35, a feedback (hereinafter referred to as "F/B") control part 36, and a motor drive control part 37.

The operating angle sensor 200 is electrically connected to the target reaction force setting part 33 and the operating velocity judgment part 35, and the torque sensor 21 is electrically connected to the adder 34.

The target reaction force setting part 33 has a data table, which contains data of target reaction force values with respect to operating angles of the select lever 2, because target reaction forces varies according to the operating angles and operating directions of the select lever 2. Accordingly, the target reaction force setting part 33 outputs a target operating reaction force signal determined by the operating angle and the operating direction of the select lever 2 with referring to the database.

The adder 34 receives the target operating reaction force signal outputted from the target reaction force setting part 33 and the operating force signal outputted from the torque sensor 21, and calculates a variation between the target operating reaction force and the operating force to output a force variation signal to the F/B control part 36.

The operating velocity judgment part 35 receives the operating angle signal outputted from the operating angle sensor 200, and judges an operating speed and an operating direction consisting of an operating velocity of the select lever 2 to output an operating velocity signal to the F/B control part 36. The operating velocity judgment part 35 acts as an operating speed sensor of the present invention, and the operating velocity signal corresponds to an operating speed signal.

The F/B control part 36 receives the force variation signal outputted from the adder 34 and the operating velocity signal outputted from the operating velocity judgment part 35, and outputs a motor assist current signal to the motor drive control part 37. The motor assist current signal is determined by using a transfer function expressed by the following equation:

$$\alpha(Ts + 1)/(\alpha Ts + 1),$$

where $\alpha$ is a coefficient, $T$ is a time constant, and $s$ is a Laplace operator. The motor assist current signal corresponds to a feedback assist force signal of the present invention.

The F/B control part 36 changes the time constant $T$ in the above equation of the transfer function according to the operating velocity of the select lever 2 so that gain of the F/B control part 36 becomes larger, as operating velocity becomes higher.

The motor drive control part 37 receives the motor assist current signal from the F/B control part 36 and outputs motor drive current determined based on the motor assist current signal to the motor 15 so that the motor 15 generates target assist force under Power Width Modulation (PWM) control. In stead of the PMW control, the motor 15 may be driven under other controls, such as current control or armature voltage control.

The motor 15 applies motor torque to the coupling shaft 12 in order to obtain resultant force by adding the target assist force to the operating force of the driver in the select operation, thereby the resultant force moving the first and second control cables 8 and 18, the select lever 2, and the mode shift unit 300 to shift the operation modes of the automatic transmission 19.

In the select device 100, when the operating position select unit 100 fails electrically because of a broken electric wire for example, the operating force of the select lever 2 is directly transmitted from the lever 2 to the mode shift unit 300 mechanically through the first and second control cables 8 and 18, the input and output levers 10 and 13 and the others. Accordingly, the mode shift unit 300 is driven to shift the modes of the automatic transmission 19, although its operating force becomes larger than that in a normal state.

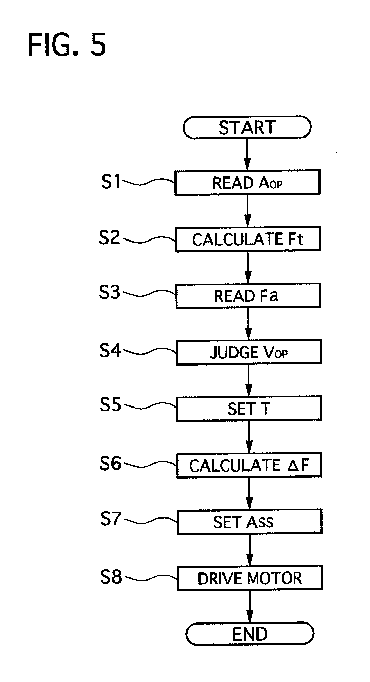

FIG. 5 shows a flowchart of an assist process executed in the control unit 22 in order to control the assist actuator 9 when the select lever 2 is operated by a driver.

At step S1, the operating angle sensor 200 detects an operating angle AOP of the select lever 2 and outputs an operating angle signal to the target reaction force setting part 33 and the operating velocity judgment part 35, and then the flow goes to step S2.

At the step S2, the target reaction force setting part 33 calculates target reaction force Ft based on the operating angle AOP by referring to the data table and outputs a target reaction signal to the adder 34, and then the flow goes to step S3.

At the step S3, the torque sensor 21 detects actual operating force Fa inputted from the select lever 2 by the driver and outputs an operating force signal to the adder 34, and then the flow goes to step S4.

At the step S4, the operating velocity judgment part 35 judges operating velocity VOP of the select lever 2 by differential of the operating angle AOP and outputs an operating velocity signal to the adder 34, and then the flow goes to step S5.

At the step S5, the F/B control part 36 sets the value of the time constant T of the transfer function based on the operating velocity VOP, and then the flow goes to step S6.

At the step S6, the adder 34 calculates a force variation $\Delta F$ by subtracting the actual operating force Fa from the target reaction force Ft, and then the flow goes to step S7.

At the step S7, the F/B control part 36 sets assist force Ass based on the force variation $\Delta F$ and the value of the time constant T and outputs a motor assist current signal to the motor drive control part 37, and then the flow goes to step S8.

At the step S8, the motor drive control part 37 outputs motor drive electric current determined based on the motor assist current signal to the motor 15, thereby the motor 15 applying assist force to the select lever 2, and then the flow ends.

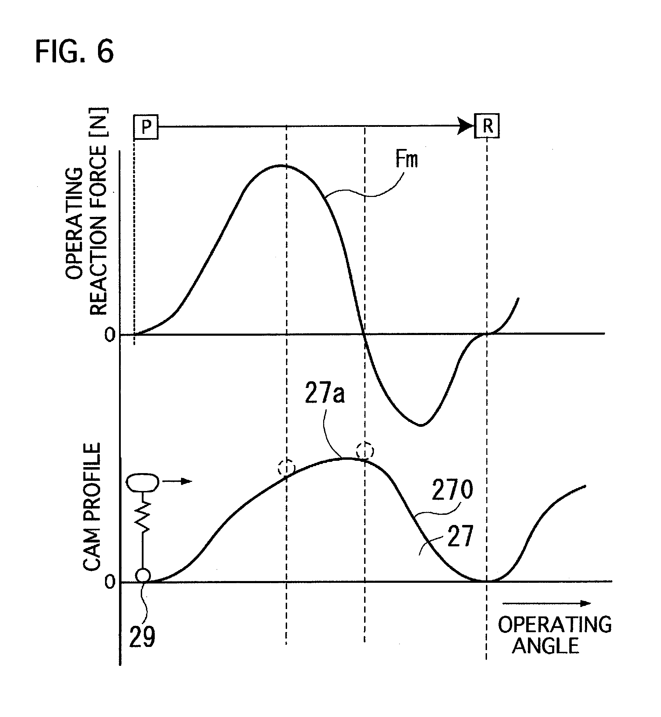

FIG. 6 shows characteristic relationships of operating reaction force Fm acting on the select lever 2, and a cam profile of the detent mechanism 350 with respect to the operating angle AOP, respectively, during the select operation from the P position to the R position.

The operating reaction force Fm is calculated by using operating select torque detected by the torque sensor 21 in a case where the motor 15 is not driven in the select operation from the Position to the R position. The reaction force Fm is generated by resultant force from the sum of friction force caused by the first and second cables 8 and 18, inertia force of the motor 15, spring force of the detent mechanism 350, and others.

The reaction force Fm increases in a direction opposite to the operating direction of the lever 2 as a function of the operating angle AOP and reaches its peak Fma before the detent pin 29 reaches the top portion 27a of the cam 270 formed on the detent plate 27 as shown in FIG. 6, and then decreases with increasing the angle AOP in this pullback zone.

Specifically, in the pull-back zone, the reaction force Fm acts on the select lever 2 against the operating force inputted by the driver until the neutral position, because the detent plate 27 is biased by the spring force of the spring plate 28 in a direction opposite to the operating direction. The larger the deformation amount of the spring plate 28 becomes in the pull-back zone, the further the select lever 2 moves in the operating direction. Note that the operating force in the opposite direction is affected by not only the deformation amount of the spring plate 28, but also the cam profile. The above-described decrease of the resistance force Fm results from a slight slope of the cam 270.

In the pull-back zone, the operating force inputted from the select lever 2 needs to overcome the reaction force Fm generated by the spring force of the spring plate 28 and the cam profile, in order to move the select lever 2 in the operating direction.

In a neutral position where the detent pin 29 is on the peak of the cam 270, the reaction force Fm acting on the select lever 2 becomes zero due to its cam profile, although the spring plate 28 is deformed to the maximum degree.

After the detent pin 29 passes over the peak, the spring plate 28 starts to reduce its deformation amount until the pin 29 reaches the bottom of the cam 270 corresponding to the R position.

In this pull-in zone, the detent plate 27 is pressed by the spring plate 28 in the operating direction, so that the lever 2 is assisted to move forward by the reaction force Fm. Accordingly, the select lever 2 is propelled by the reaction force Fm, increasing at first and then decreasing, in such a way that the lever 2 is pulled into the bottom portion 27b corresponding to the R position.

Therefore, the operating force to be applied from the select lever 2 needs to be larger than and overcome the reaction force Fm shown in FIG. 6 in order to manually move the select lever 2 for an select operation without assist force of the motor 15.

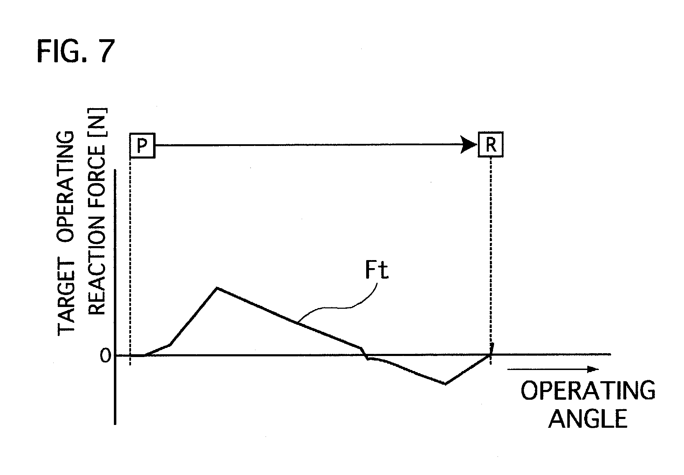

FIG. 7 is a schematic diagram showing target reaction force Ft with respect to the operating angle AOP when the select lever 2 is shifted from the P position to the R position. This target reaction force Ft is set as shown in FIG. 7 so as to bring a driver favorable operationality by providing nice click-feeling during the select operation.

When the select lever 2 is moved from the P position to the R position for example, the target reaction force Ft is set to have a pull-back zone where the target resistance force Ft acts against the operating direction of the lever 2, indicated by a line Ft over a horizontal axis of the operating angle in FIG. 7, a neutral poison on the horizontal axis, and a pull-in zone where the target resistance force Ft acts in the operating direction, indicated by the line Ft under the horizontal axis. In the pull-back zone and pull-in zone, the target reaction force Ft increases at first and then decreases, although their acting directions are different from each other.

In the operating position select device 100 of the first embodiment, the assist control is executed so that assist force added from the motor 15 and operating force inputted by a driver overcome the resistance force Fm shown in FIG. 6 and the driver receives the target resistance force Ft shown in FIG. 7.

This control brings high robust in the select lever assist control accompanied with steep and large torque variation, resulting in favorable operationality.

The assist control is also executed based on operating velocity of the select lever 2. Because the assist control based on only the operating angle of the select lever 2 caused heavy operation when the lever 2 is operated to move at high speed, due to control delay, resulting in late output of assist force.

In addition, the select lever 2 is occasionally vibrated when a select operation, for example, from the P position to R position in which a release button of the knob 4 is not pressed into it and the lever 2 is pressed hard onto a gate mechanism of select lever unit 1. This vibration results from the assist force causing a vibration system having equivalent rigidity of motor inertia and a rod to be vibrated.

These disadvantages are settled by changing the gain of the F/B control part 3 based on an operating velocity signal outputted from the operating velocity judgment part 35.

When the select lever 2 is moved at high speed by the driver, the operating velocity judgment part 35 calculates an operating velocity by differentiating an operating angle of the select lever 2, and the F/B control part 36 changes the time constant T of the transfer function expressed by the equation of $\alpha(Ts + 1)/(\alpha Ts + 1)$ based on the operating velocity.

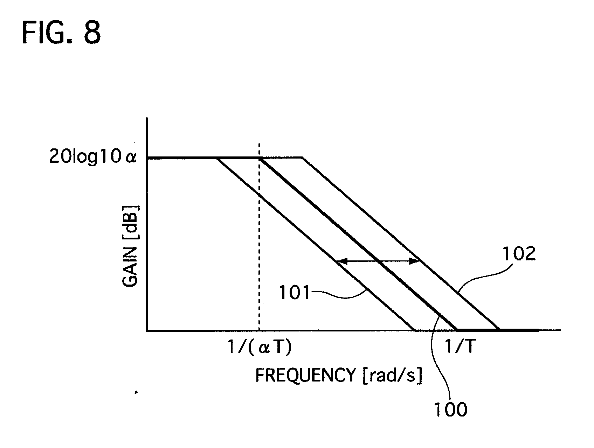

FIG. 8 shows a relationship between frequency and gain used in the F/B control part 36. The frequency is proportional to the inverse of a time constant T. As shown in FIG. 8, the time constant T is changed in the F/B control part 36 to become smaller at higher operating velocity so as to increase the gain, as shown in a line 102 shifted from a line 100 at the frequency of 1/T, which improves tracking ability in F/B control. This gain change can avoid heavy select operation and provide favorable select operation feeling to the driver. The time constant T is also changed to become larger at lower operating velocity so as to decrease the gain, as shown in a line 101 shifted from the line 100. This gain change can provide the assist control with high stability.

When the release button of the knob 4 is not pressed into it and the lever 2 is operated to move, the gate mechanism prevents its movement by contacting with a gate of the gate mechanism. In this state, the assist control is ended by driver's stopping press of the lever 2, while the assist control is continued by keeping the lever 2 to be pressed. In the latter case, the operating velocity judgment part 35 detects very low operating velocity, and thereby the F/B control part 36 increases the time constant T so as to decrease the gain. This control can bring the assist control to be stable and prevent the select lever 2 from a vibration due to the assist force.

This operating position select device 100 of the first embodiment has many advantages described below.

The select lever 2 can be shorter than a conventional one by approximately 150 mm at its portion projecting from a center console toward a passenger compartment without increasing an operating force applied to the select lever 2 so much. This brings a design freedom concerning an installation location of the select lever and/or a layout of a passenger compartment to be broadened.

When operating the select lever 2, assist torque from the electric motor 15 is applied to the coupling shaft 12 of the mechanically connecting mechanism so as to reduce the operating force applied to the select lever 2. When the operating position select unit 100 fails electrically, a driver can shift the mode shift unit 300 by operating the select lever 2 because the select lever 2 and the mode shift unit 300 are mechanically connected by the mechanically connecting mechanism, such as the first and second control cables 8 and 18 and the others.

The operating velocity judgment part 35 detects operating velocity of the select lever 2, and the F/B control part 36 changes the gain based on the operating velocity, which enables the driver to move the lever 2 with light operating force even when the lever 2 is moved at high velocity, and can prevent a vibration of the lever 2 due to the assist force when the lever 2 is kept pressed onto the gate without pressing the release button into the knob 4 of the lever 2.

The F/B control part 36 sets the gain to be larger as operating velocity becomes higher, and sets the gain to be smaller when the lever 2 is prevented from moving. The former can improve in tracking ability of assist force so as to avoid heavy select operation of the lever 2 at high operating velocity, and the latter can prevent the lever 2 to be vibrated by assist force when the lever 2 is kept pressed onto the gate without pressing the release button into the knob 4 of the lever 2.

The F/B control part 36 determines assist force based on a vibration between target operating force and operating force by using the transfer function expressed by the equation of $\alpha(Ts + 1)/(\alpha Ts + 1)$ where the time constant T is changed based on the operating velocity. This control enables a driver to operate the lever 2 with light strength in a select operation, avoiding the vibration of the lever 2 when the lever 2 is kept pressed onto the gate without pressing the release button into the knob 4 of the lever 2.

The operating velocity judgment part 35 detects operating velocity of the lever 2 by differentiating an operating angle of the select lever 2, which can remove an additional device for detecting the operating velocity.

In the first embodiment, the operating velocity is calculated by differentiating the operating angle of the select lever 2, but it may be calculated based on operating force inputted from the lever 2, because high operating velocity results from strong operating force. This can provide the operating velocity judgment part 35 with detection of operating velocity which is less subject to noise.

In stead of the operating velocity in the first embodiment, an operating speed of the select lever 2 may be used without its operating direction.

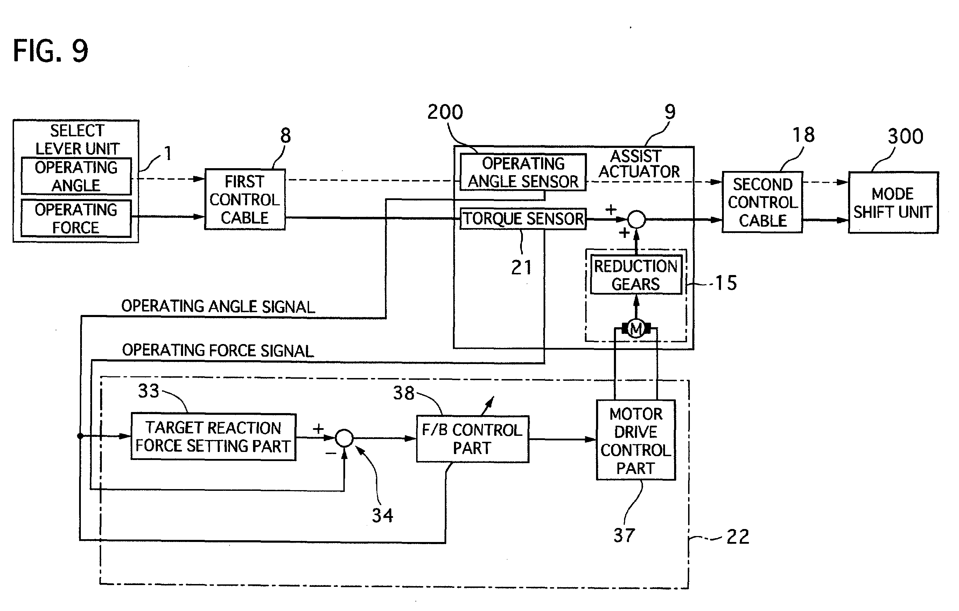

Next, an operating position select device of a second embodiment according to the present invention will be described with reference to the accompanying drawings of FIGS. 9 to 11.

This operating position select device is constructed similarly to that of the first embodiment shown in FIGS. 1 to 3 except a control unit 22. The control unit 22 of the second embodiment lacks the operating velocity judgment part 35 of the first embodiment, because its F/B control part 38 is constructed so that it does not change a time constant T based on operating velocity of a lever, but changes the time constant T based on an operating angle of the lever. The F/B control part 38 has a transfer function expressed by an equation of $\alpha(Ts + 1)/(\alpha Ts + 1)$.

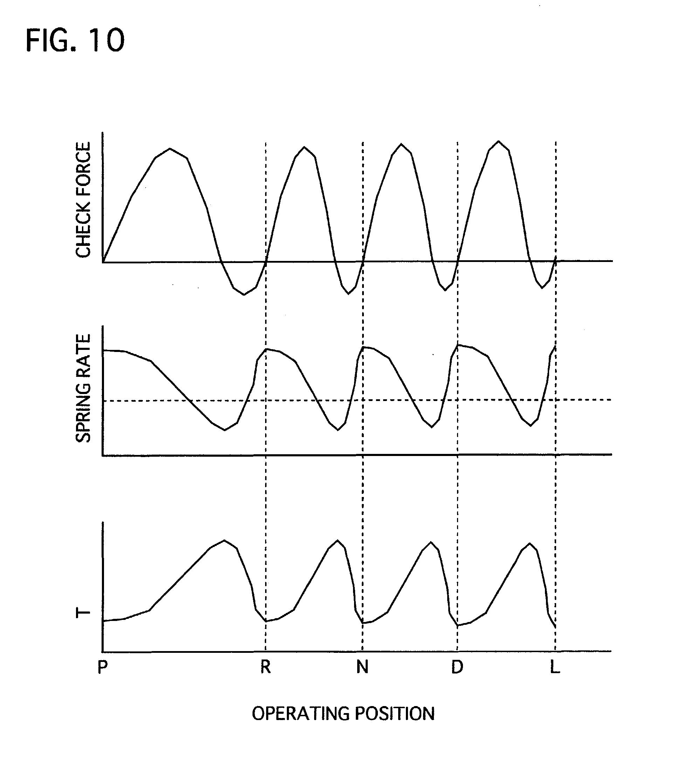

The time constant T is set as below. FIG. 10 is a characteristic diagram illustrating check force generated in a detent mechanism, a spring constant of the detent mechanism, and the time constant T with respect to an operating position corresponding to an operating angle detected by an operating angle sensor 200, not shown. The check force acting on the select lever is caused by a relationship between a cam profile of a detent plate and a spring plate of the detent mechanism, which is shown in the upper part of FIG. 10. The spring constant is obtained from a gradient of a curved line representing the check force, which is shown in the intermediate part of FIG. 10. The time constant T is set so that the time constant T becomes larger as the spring constant illustrated in the intermediate part of FIG. 10 becomes smaller as shown in the lower part of FIG. 10, which enables the operating position select device to improve stability of assist control. Accordingly, a gain of the F/B control unit 38 is changed according to the time constant T.

The other parts of the operating position select device of the second embodiment are similar to those of the first embodiment.

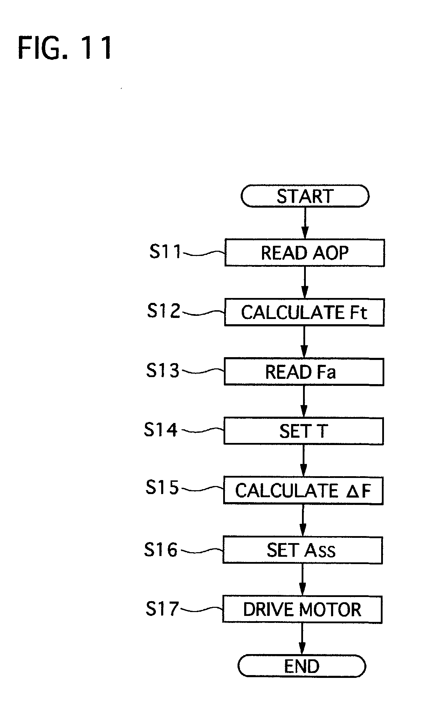

FIG. 11 is a flowchart of the assist control executed by the control unit 22.

At step S11, the operating angle sensor 200 detects an operating angle AOP and outputs an operating angle signal to a target reaction force setting part 33 and the F/B control part 38, and then the flow goes to step S12.

At the step S12, the target reaction force setting part 33 calculates target reaction force Ft based on the operating angle AOP by referring to a data table and outputs a target reaction signal to the adder 34, and then the flow goes to step S13.

At the step S13, the torque sensor 21 detects actual operating force Fa inputted from the select lever 2 by a driver and outputs an operating force signal to an adder 34, and then the flow goes to step S 14.

At the step S14, the F/B control part 38 sets the value of the time constant T of the transfer function based on the operating angle AOP, and then the flow goes to step S 15.

At the step S15, the adder 34 calculates a force variation ΔF by subtracting the actual operating force Fa from the target reaction force Ft, and then the flow goes to step S16.

At the step S16, the F/B control part 38 sets assist force Ass based on the force variation ΔF and the value of the time constant T so and outputs a motor assist current signal to a motor drive control part 37, and then the flow goes to step S17. The motor assist current signal corresponds to a feedback assist force signal of the present invention.

At the step S17, the motor drive control part 37 outputs motor drive current determined based on the motor assist current signal to an electric motor 15, thereby the motor 15 applying assist force under PMW control to the select lever 2, and then the flow ends.

The F/B control is executed in such a manner that gain becomes smaller by setting the time constant T to be larger in a select- lever pull-in zone, which is an unstable zone where the select lever is urged to move forward by the check force generated by the detent mechanism so that a detent pin can be positioned in a bottom of a cam of the detent mechanism.

FIG. 10 shows relationships of check force caused by the detent mechanism, a spring rate of a spring plate used in the detent mechanism, and a time constant with respect to an operating position, for example an operating angle, of the select lever. The spring rate, shown in the intermediate part of FIG. 10, is obtained based on a gradient of the check force shown in the upper part of FIG. 10.

In detail, in a zone, corresponding to a pull-in zone, where the spring constant of the check force produced by the spring plate is low, variation of assist force easily affects the behavior of the select lever 2, increasing the possibility of hunting. In the second embodiment, the time constant T is set to become larger as the operating position becomes nearer the pull-in zone, thereby decreasing the gain so as to improve control stability.

When the select lever is pressed onto a gate of a select-lever guide, its position is judged to be in the pull-in zone, which causes the F/B control par 38 to set the time constant to be larger and thereby decreasing the gain. This gain change can prevent a vibration of the select lever due to assist control.

In addition, in this embodiment, compensation of the time constant T can keep the gain to be constant in a low frequency region, thereby ensuring suppressing ability of steady force-variation of operating force.

The advantages of the operating position select device of the second embodiment will be described.

The select lever can be shorter than a conventional one by approximately 150 mm at its portion projecting from a center console toward a passenger compartment without increasing an operating force applied to the select lever so much. This brings a design freedom concerning an installation location of the select lever and/or a layout of a passenger compartment to be broadened.

When operating the select lever, assist torque from an electric motor 15 is applied to a mechanically connecting mechanism so as to reduce the operating force applied to the select lever. When the operating position select unit fails electrically, a driver can shift a mode shift unit 300 by operating the select lever because the select lever and the mode shift unit 300 are mechanically connected by the mechanically connecting mechanism, such as first and second control cables 8 and 18 and the others.

The F/B control part 38 outputs a motor assist current signal by multiplying gain to a force variation between operating force inputted from the lever and target reaction force obtained beads on operating angle of the lever from a target reaction force setting part 33, where it changes the gain based on the operating position. This gain change enables the driver to move the lever with light operating force by ensuring suppressing ability of steady force-variation of operating force, and can prevent a vibration of the lever due to the assist force when the lever is kept pressed onto the gate without pressing the release button into a knob of the lever.

The F/B control part 38 sets the gain to be smaller as operating angle becomes to be nearer the pull-in zone, which can avoid lack of control stability in a zone where spring rate becomes low.

While there have been particularly shown and described with reference to preferred embodiments thereof, it will be understood that various modifications may be made therein, and it is intended to cover in the appended claims all such modifications as fall within the true spirit and scope of the invention.

For example, the operating force F may be detected based on an estimate from supply current to the motor 15 and its rotational speed in stead of using the torque sensor 21.

The operating position can be detected by the displacement amount of the select lever 2 or the mechanically connecting mechanism 400 that connects the select lever 2 and the mode shift unit 300 with each other instead of the operating angle of the select lever 2.

The mechanically connecting mechanism may be rods or linkage instead of the first and second control cables 8 and 18 in the above embodiments. The select lever may be of a shape different from the above embodiments.

The select lever 2 may have a configuration different from that of the first embodiment shown in FIG. 1, for example, a finger- controable one.

The configuration of the cam of the detent mechanism may be formed arbitrarily to have different target reaction force.

## Claims

1. An operating position select device (100) for an automatic transmission (19) whose operation modes are shiftable, the operating position select device (100) comprising:

   a select lever unit (1) having a select lever (2) that is operated by a driver between a plurality of select positions corresponding to the operation modes;

   an operating position sensor (200) that detects an operating position of the select lever (2) and outputs an operating position signal;

   an operating force sensor (21) that detects operating force applied to the select lever (2) and outputs an operating force signal;

   an operating speed sensor (35) that detects operating speed of the select lever (2) and outputs an operating speed signal;

   a mode shift unit (300) mounted on the automatic transmission (19) to shift operation modes of the automatic transmission (19);

   a mechanically connecting means (8, 12, 18) that mechanically connects the select lever(2) and said mode shift unit (300) with each other;

   an assist actuator (9) that is arranged between the select lever (2) and said mode shift unit (300) and supplies assist force to the shift lever (2); and

a control unit (22) that controls said assist actuator (9), said control unit (22) including a target reaction-force characteristic setting part (33) that sets a target reaction-force characteristic necessary for operating the select lever (2) with respect to the operating position, a feedback control part (36; 38) that determines feedback assist force by multiplying gain by a variation between target reaction force obtained based on the target operating reaction-force characteristic and the operating force obtained based on the operating force signal and outputs a feedback assist force signal, and a gain changing part (36; 38) that changes gain used for determining the feedback assist force based on the operating speed signal.

2. An operating position select device (100) for an automatic transmission (19) according to claim 1, wherein
the gain changing part (36) changes the gain based on the operating signal so that the gain is increased as the operating speed becomes higher, and decreased in a case that the select lever (2) is prevented from moving.

3. An operating position select device (100) for an automatic transmission (19) according to claim 1 or 2, wherein
the feedback control part (36; 38) has transfer function and calculates a feedback assist force based on the variation with using the transfer function, and the gain changing part (36; 38) changing a value of a time constant so as to change a value of the gain.

4. An operating position select device (100) for an automatic transmission (19) according to claim 3, wherein
the transfer function is given by an equation of $\alpha(Ts + 1)/(\alpha Ts + 1)$, where $\alpha$ is a coefficient, s is Laplace operator, and T is the time constant.

5. An operating position select device (100) for an automatic transmission (19) according to any one of claims 1 to 4, wherein
the operating speed sensor (35) calculates the operating speed by differentiating the operating position of the select lever (2).

6. An operating position select device (100) for an automatic transmission (19) according to any one of claims 1 to 4, wherein
the operating speed sensor (35) calculates the operating speed based on the operating force inputted from the select lever (2).

7. An operating position select device (100) for an automatic transmission (19) whose operation modes are shiftable, the operating position select device (100) comprising:

a select lever unit (1) having a select lever (2) that is operated by a driver between a plurality of select positions corresponding to the operation modes;

an operating position sensor (200) that detects an operating position of the select lever (2) and outputs an operating position signal;

an operating force sensor (21) that detects operating force applied to the select lever (2) and outputs an operating force signal;

a mode shift unit (300) mounted on the automatic transmission (19) to shift operation modes of the automatic transmission (19);

a mechanically connecting means (8, 12, 18) that mechanically connects the select lever(2) and said mode shift unit (300) with each other;

an assist actuator (9) that is arranged between the select lever (2) and said mode shift unit (300) and supplies assist force to the shift lever (2); and

a control unit (22) that controls said assist actuator (9), said control unit (22) including a target reaction-force characteristic setting part (33) that sets a target reaction-force characteristic necessary for operating the select lever (2) with respect to the operating position, a feedback control part (36; 38) that determines feedback assist force by multiplying gain by a variation between target reaction force obtained based on the target operating reaction-force characteristic and the operating force obtained based on the operating force signal and outputs a feedback assist force signal, and a gain changing part (36; 38) that changes gain used for determining the feedback assist force based on the operating angle signal.

8. An operating position select device (100) for an automatic transmission (19) according to claim 7, wherein
the gain changing part (38) decreases the gain based on the operating position signal so that the gain is decreased as the select lever (2) moves near a pull-in zone where the select lever (2) is urged in an operating direction due to check force produced by a detent mechanism (270) of the automatic transmission (19).

9. An operating position select device (100) for an automatic transmission (19) according to claim 8, wherein
the feedback control part (36; 38) has transfer function and calculates a feedback assist force based on the variation with using the transfer function, and the gain changing part (36; 38) changing a value of a time constant so as to change a value of the gain.

10. An operating position select device (100) for an automatic transmission (19) according to claim 3, wherein
the transfer function is given by an equation of $\alpha(Ts + 1)/(\alpha Ts + 1)$, where $\alpha$ is a coefficient, s is Laplace operator, and T is the time constant.

EP 1 591 697 A2

FIG. 1

FIG. 2

FIG. 3

# FIG. 4

SELECT LEVER UNIT — 1
OPERATING ANGLE
OPERATING FORCE

FIRST CONTROL CABLE — 8

OPERATING ANGLE SENSOR — 200

ASSIST ACTUATOR — 9

TORQUE SENSOR — 21

REDUCTION GEARS — 15

SECOND CONTROL CABLE — 18

MODE SHIFT UNIT — 300

OPERATING ANGLE SIGNAL

OPERATING FORCE SIGNAL

TARGET REACTION FORCE SETTING PART — 33

F/B CONTROL PART — 36

MOTOR DRIVE CONTROL PART — 37

OPERATING VELOCITY JUDGMENT PART — 35

34

22

EP 1 591 697 A2

# FIG. 5

```
         ┌─────────────────┐
         (     START       )
         └─────────────────┘
                  │
                  ▼
S1 ──┐   ┌─────────────────┐
     └───│    READ Aop     │
         └─────────────────┘
                  │
                  ▼
S2 ──┐   ┌─────────────────┐
     └───│   CALCULATE Ft  │
         └─────────────────┘
                  │
                  ▼
S3 ──┐   ┌─────────────────┐
     └───│    READ Fa      │
         └─────────────────┘
                  │
                  ▼
S4 ──┐   ┌─────────────────┐
     └───│   JUDGE Vop     │
         └─────────────────┘
                  │
                  ▼
S5 ──┐   ┌─────────────────┐
     └───│     SET T       │
         └─────────────────┘
                  │
                  ▼
S6 ──┐   ┌─────────────────┐
     └───│  CALCULATE ΔF   │
         └─────────────────┘
                  │
                  ▼
S7 ──┐   ┌─────────────────┐
     └───│    SET Ass      │
         └─────────────────┘
                  │
                  ▼
S8 ──┐   ┌─────────────────┐
     └───│  DRIVE MOTOR    │
         └─────────────────┘
                  │
                  ▼
         ┌─────────────────┐
         (      END        )
         └─────────────────┘
```

## FIG. 6

FIG. 7

FIG. 8

# FIG. 9

EP 1 591 697 A2

FIG. 10

OPERATING POSITION

# FIG. 11

```
              START
               │
               ▼
S11 ──┤    READ AOP    │
               │
               ▼
S12 ──┤  CALCULATE Ft  │
               │
               ▼
S13 ──┤    READ Fa     │
               │
               ▼
S14 ──┤     SET T      │
               │
               ▼
S15 ──┤  CALCULATE ΔF  │
               │
               ▼
S16 ──┤    SET Ass     │
               │
               ▼
S17 ──┤  DRIVE MOTOR   │
               │
               ▼
               END
```